# EUROPÄISCHE PATENTANMELDUNG

(11) **EP 1 475 503 A2**
(43) Veröffentlichungstag der Anmeldung: **10.11.2004**
(21) Anmeldenummer: 04007506.1
(22) Anmeldetag: 29.03.2004
(51) Int. Cl.: E05F 15/12, E05D 3/06

(54) **Klappenantrieb für eine Klappe**

(30) Priorität: 05.05.2003 DE 10320098
(71) Anmelder: Stabilus GmbH, D-56070 Koblenz (DE)
(72) Erfinder: Kleinmann, Michael Dipl.-Ing. (FH), 56581 Melsbach (DE); Ritter, Andreas Dipl.-Ing. (FH), 56206 Hilgert (DE)
(74) Vertreter: Klein, Thomas, Dipl.-Ing.

(57) **Zusammenfassung**

Die Erfindung bezieht sich auf einen Klappenantrieb für eine Klappe 10, die zwei gleiche paarweise mit Abstand zueinander angeordnete Hebelgelenkanordnungen aufweist, über die die Klappe 10 aus ihrer Schließstellung in ihre Öffnungsstellung und zurück bewegbar ist Dabei sind die Hebelgelenkanordnungen mit ihren einen Enden jeweils an einem Seitenbereich der Klappe 10 und mit ihren anderen Enden ortsfest an dem Kraftfahrzeug schwenkbar angelenkt. Die einander entsprechenden Schwenkachsen 6 und 7 der Anlenkstellen erstrecken sich zueinander koaxial. Von einer gemeinsamen notorischen Antriebseinheit sind Bewegungsübertragungsmittel zum schwenkbaren Antrieb eines ortsfest an dem Kraftfahrzeug angelenkten Hebels 3, 3' jeder Hebelgelenkanordnung geführt.

## Beschreibung

Die Erfindung bezieht sich auf einen Klappenantrieb für eine Klappe, insbesondere für die Heckklappe eines Kraftfahrzeugs, die zwei gleiche paarweise mit Abstand zueinander angeordnete Hebelgelenkanordnungen aufweist, über die die Klappe aus ihrer Schließstellung in ihre Öffnungsstellung und zurück bewegbar ist, wobei die Hebelgelenkanordnungen mit ihren einen Enden jeweils an einem Seitenbereich der Klappe und mit ihren anderen Enden ortsfest an dem Kraftfahrzeug oder einem Bauteil des Kraftfahrzeugs schwenkbar angelenkt sind und die einander entsprechenden Schwenkachsen der Anlenkstellen sich zueinander koaxial erstrecken

Bei einem derartigen Klappentrieb sind als Hebelgelenkanordnungen Parallelogramm-Hebelgelenkanordnungen bekannt, durch die eine Heckklappe aus einer senkrecht ausgerichteten Schließposition in etwa senkrechter Lage in einem Bogen in eine ebenfalls senkrecht ausgerichtete Öffnungsposition bewegbar ist. Dazu werden beide Hebelgelenkanordnungen von zwei separaten Antriebseinheiten angetrieben Durch die zwei Antriebseinheiten ist der Klappenantrieb aufwendig und benötigt viel Bauraum.

Darüber hinaus kommt es durch die zwei separaten Antriebseinheiten leicht zu einem ungleichen Antrieb und damit zu einer unsymmetrischen Momentaufbringung an beiden Seiten der Klappe, so daß es zu Verspannungen der Klappe während des Bewegungsantriebs kommen kann.

Aufgabe der Erfindung ist es daher einen Klappenantrieb der eingangs genannten Art zu schaffen, der geringen Bauaufwand und geringen Bauraum benötigt und durch den Verspannungen der Klappe während deren Bewegungsantriebs vermieden werden

Diese Aufgabe wird erfindungsgemäß dadurch gelöst, daß von einer gemeinsamen motorischen, insbesondere elektromotorischen Antriebseinheit Bewegungsübertragungsmittel zum schwenkbaren Antrieb eines ortsfest an dem Kraftfahrzeug oder einem Bauteil des Kraftfahrzeugs angelenkten Hebels jeder Hebelgelenkanordnung geführt sind.

Durch diese Ausbildung erfolgt eine symmetrische Momentaufbringung des Antriebs an beiden Seiten der Klappe während deren Bewegungswegs, so daß eine Verspannung der Klappe während der Bewegung vermieden wird.

Die nur eine Antriebseinheit benötigt nur wenig Bauraum und einen geringen Bauaufwand

Die ortsfest an dem Kraftfahrzeug oder einem Bauteil des Kraftfahrzeugs angelenkten Hebel können aus ihrer Schließstellung in ihre Öffnungsstellung um verschiedene Winkel, insbesondere aber um etwa 180° schwenkbar sein. Damit wird eine große Entfernung der Klappe aus ihrer Schließstellung heraus in ihre Öffnungsstellung erreicht.

Eine stabile Halterung der Klappe wird erreicht, wenn die Hebelgelenkanordnungen Viergelenk-Hebelanordnungen sind.

Sind dabei die Viergelenk-Hebelanordnungen zumindest annähernd Parallelogramm-Hebelanordnungen, so erfolgt eine Klappenbewegung mit zumindest weitgehend gleicher Ausrichtung der Ebene der Klappe während des gesamten Bewegungsweges. Damit ist auch der erforderliche Raum, durch den die Klappe bewegt wird, besonders gering

Eine besonders einfache motorische Antriebseinheit besteht aus einem Drehantrieb.

Der Aufbau ist besonders einfach, wenn durch den Drehantrieb eine starre Antriebswelle drehbar antreibbar ist, die sich koaxial zu einer der Schwenkachsen der ortsfesten Anlenkstellen am Kraftfahrzeug oder einem Bauteil des Kraftfahrzeugs erstreckt und drehfest jeweils mit einem der einander entsprechenden Hebel der Hebelgelenkanordnungen verbunden ist

Um das von dem Drehantrieb aufzubringende Moment reduzieren zu können und/oder den Drehantrieb an einer von der Klappe entfernteren Stelle anordnen zu können, kann durch den Drehantrieb eine starre Antriebwelle drehbar antreibbar sein, die sich parallel zu einer der Schwenkachsen der ortsfesten Anlenkstellen am Kraftfahrzeug oder einem Bauteil des Kraftfahrzeugs erstreckt und die über Getriebe mit jeweils einem der einander entsprechenden Hebel der Hebelgelenkanordnung verbunden ist, wobei diese Hebel von den Getrieben um die Schwenkachse schwenkbar antreibbar sind.

Dabei können in einfachem Aufbau die Getriebe Kettengetriebe oder Zahnriemengetriebe sein, die ein auf der Antriebswelle fest angeordnetes Antriebsrad und ein an dem Hebel drehfest angeordnetes Triebrad aufweisen, wobei eine Kette oder ein Zahnriemen um Antriebsrad und Triebrad geführt sind.

In einer weiteren Ausbildung können durch den Drehabtrieb flexible Wellen drehbar antreibbar sein, die sich jeweils zu einer der Schwenkachsen der ortsfesten Anlenkstellen am Kraftfahrzeug oder einem Bauteil des Kraftfahrzeugs erstrecken und durch die jeweils ein Hebel der Hebelgelenkanordnung drehbar antreibbar ist.

Diese Ausbildung ermöglicht mit großen Freiheitsgraden eine Anordnung der Antriebseinheit an einer entfernten Stelle.

Zur Reduzierung des von der Antriebseinheit aufzubringenden Drehmoments ist von jeder flexiblen Welle der ihr zugeordnete Hebel über ein oder mehrere Getriebe drehbar antreibbar.

Besonders gering ist dabei das aufzubringende Drehmoment, wenn das Getriebe ein Planetengetriebe oder ein Schneckengetriebe ist.

In einer weiteren Ausbildung kann die motorische Antriebseinheit ein Seilzugantrieb sein, durch den zwei Seile ziehbar antreibbar sind, die zu Seilrollen führen und auf diese aufwickelbar sind, die jeweils koaxial zu einer der Schwenkachsen der ortsfesten Anlenkstellen am Kraftfahrzeug oder einem Bauteil des Kraftfahrzeugs angeordnet und drehfest mit jeweils einem der einander entsprechenden Hebel der Hebelgelenkanordnungen verbunden sind

Auch diese Ausbildung ermöglicht mit großen Freiheitsgraden eine Anordnung der Antriebseinheit an einer von der Klappe entfernten Stelle.

Dabei können durch den Seilzugantrieb eine oder zwei Antriebsseilrollen drehbar antreibbar sein, auf die eines oder zwei der Seile aufwickelbar sind.

Eine andere Möglichkeit besteht darin, daß durch den Seilzugantrieb eine oder zwei Zahnstangen in ihrer Längsrichtung bewegbar antreibbar sind, an denen eines oder zwei der Seile ziehbar befestigt sind.

Sind jeweils zwei Seile von der Antriebsseilrolle oder der Zahnstange zu einer Seilrolle geführt und gegenläufig auf die Antriebsseilrolle aufwickelbar oder von der Zahnstange ziehbar sowie gegenläufig auf die Seilrolle auf- und abwickelbar, so ist durch den Klappenantrieb nicht nur eine Öffnungsbewegung sondern auch eine Schließbewegung der Klappe durchführbar. Dazu muß nur eine Bewegungsrichtungsumkehr der Seilrolle oder der Zahnstange erfolgen.

Zur Reduzierung des von der motorischen Antriebseinheit aufzubringenden Drehmoments kann die Antriebsseilrolle oder die Zahnstange über ein Getriebe, insbesondere ein Untersetzungsgetriebe von der motorischen Antriebseinheit antreibbar sein.

In einer weiteren Ausbildung kann jeweils ein ortsfest an dem Kraftfahrzeug oder einem Bauteil des Kraftfahrzeugs angelenkter Hebel jeder Hebelgelenkanordnung einen ersten Hilfshebel aufweisen, der an dem Hebel mit seinem einen Endbereich in einem Abstand zur Verbindungslinie zwischen der ortsfesten Anlenkstelle des Hebels am Kraftfahrzeug oder einem Bauteil des Kraftfahrzeugs und der Anlenkstelle an der Klappe um eine zu den Schwenkachsen des Hebels parallele erste Gelenkachse schwenkbar angelenkt und im Bereich der Verbindungslinie in einem Abstand zur ortsfesten Anlenkstelle an einem ersten Anschlag anschlagbar ist und an dessen anderem Endbereich von ersten Bewegungsmitteln etwa in Richtung der Erstreckung des Hebels in der Schließstellung oder der Öffnungsstellung kraftbeaufschlagbar ist.

Durch den Hilfshebel wird eine Totpunktlage des Antriebs vermieden, wie sie sonst bei großen Öffnungswinkeln der Hebel entstehen würde. Darüber hinaus kann das den Hebel beaufschlagende Drehmoment weitgehend konstant gehalten werden.

Um einen Bewegungsantrieb in beide Bewegungsrichtungen zu ermöglichen, kann der ortsfest an dem Kraftfahrzeug oder einem Bauteil des Kraftfahrzeugs angelenkte Hebel einen zweiten Hilfshebel aufweisen, der an dem Hebel mit seinem einen Endbereich in einem Abstand zur Verbindungslinie zwischen der ortsfesten Anlenkstelle des Hebels am Kraftfahrzeug oder einem Bauteil des Kraftfahrzeugs und der Anlenkstelle an der Klappe auf der der ersten Gelenkachse gegenüberliegenden Seite der Verbindungslinie um eine zu den Schwenkachsen des Hebels parallele zweite Gelenkachse schwenkbar angelenkt und im Bereich der Verbindungslinie in einem Abstand zur ortsfesten Anlenkstelle an einem zweiten Anschlag anschlagbar ist und an dessen anderem Endbereich von zweiten Bewegungsmitteln etwa in Richtung der Erstreckung des Hebels in der Schließstellung oder der Öffnungsstellung kraftbeaufschlagbar ist.

Dabei wird ein bauraumsparender flacher Aufbau des Klappenantriebs erreicht, wenn der erste Hilfshebel und der zweite Hilfshebel an einander gegenüberliegenden Seiten des Hebels angeordnet sind

Der erste und der zweite Hilfshebel können unterschiedliche Länge aufweisen

Sind der erste und zweite Anschlag etwa koaxial zueinander angeordnet und sind der erste und der zweite Hilfshebel etwa gleichlang, so können gleiche kinematische Verhältnisse sowohl für den Öffnungs- als auch für den Schließvorgang bei geringer Baugröße erreicht werden.

Die ersten und/oder die zweiten Bewegungsmittel können Seile eines Seilzugs und/oder Gasfedern sein.

Im Falle der Gasfedern sind diese gleichzeitig auch die Antriebseinheit. Dabei kann auch jeder Hebelgelenkanordnung eine Gasfeder zugeordnet sein.

Um zu vermeiden, daß ein sich im Bewegungsweg der Klappe befindliches Hindernis eingeklemmt und beschädigt wird, kann durch eine Hinderniserkennung ein eine Schwenkbewegung der Hebelanordnung behindernder Widerstand erfaßbar und ein entsprechendes Widerstandssignal einer Elektronik zuführbar sein, durch die die Antriebseinheit in der einen Antriebsrichtung anhaltbar ist

Um ein derartiges Hindernis sofort wieder freigeben zu können, kann durch die Elektronik bei Erhalt eines Widerstandssignals die Antriebseinheit um einen bestimmten Weg entgegen der einen Antriebsrichtung bewegend umschaltbar sein.

Dazu kann die Hinderniserkennung einen die jeweilige Position eines der Hebel der Hebelanordnung erfassenden Positionssensor, insbesondere ein Potentiometer aufweisen, durch den ein entsprechendes Positionssignal erzeugbar und der Elektronik zuführbar sowie in der Elektronik die zum Erreichen der jeweiligen Position tatsächlich benötigte Laufzeit mit einer bestimmten vorgegebenen Laufzeit zum Erreichen der jeweiligen Position vergleichbar sein, wobei bei Überschreitung der vorgegebenen Laufzeit durch die tatsächliche Laufzeit das Widerstandssignal erzeugbar ist.

Die Erfassung der Position eines der Hebel der Hebelanordnung kann auch auf indirekte Weise erfolgen, indem z B. durch einen Sensor wie z.B. einen Hall-Sensor die Position der Antriebseinheit erfaßt wird. Dazu kann der Sensor in die Antriebseinheit integriert sein.

Erfolgt eine Bewegung der Klappe nicht durch die motorische Antriebseinheit sondern durch manuelle Kraftbeaufschlagung, ist es von Vorteil, wenn zwischen der motorischen Antriebseinheit und den Bewegungsübertragungsmitteln oder zwischen den Bewegungsübertragungsmitteln und dem davon schwenkbar antreibbaren Hebel der Hebelgelenkanordnung eine Kupplung angeordnet ist, die bei manueller Bewegungsbeaufschlagung der Klappe öffenbar ist.

Ausführungsbeispiele der Erfindung sind in der Zeichnung dargestellt und werden im folgenden näher beschrieben. Es zeigen
- Figur 1: eine schematische Perspektivdarstellung eines ersten Ausführungsbeispiels eines Klappenantriebs
- Figur 2: eine schematische Perspektivdarstellung eines zweiten Ausführungsbeispiels eines Klappenantriebs
- Figur 3: eine schematische Perspektivdarstellung eines dritten Ausführungsbeispiels eines Klappenantriebs
- Figur 4: eine schematische Perspektivdarstellung eines vierten Ausführungsbeispiels eines Klappenantriebs
- Figur 5: eine schematische Perspektivdarstellung eines fünften Ausführungsbeispiels eines Klappenantriebs
- Figur 6: ein erstes Ausführungsbeispiel eines Seilzugantriebs des Klappenantriebs nach Figur 5
- Figur 7: ein zweites Ausführungsbeispiel eines Seilzugantriebs des Klappenantriebs nach Figur 5
- Figur 8: eine perspektivische Ansicht einer Hebelgelenkanordnung des Klappenantriebs nach Figur 5 in der Schließstellung
- Figur 9: die Hebelgelenkanordnung nach Figur 8 in einer mittleren Öffnungsstellung
- Figur 10: die Hebelgelenkanordnung nach Figur 8 in der völligen Öffnungsstellung
- Figur 11: einen vergrößerten perspektivischen Ausschnitt der Hebelgelenkanordnung nach Figur 8 in einer Stellung zwischen der Schließstellung und der mittleren Öffnungsstellung
- Figur 12: einen vergrößerten perspektivischen Ausschnitt der Hebelgelenkanordnung nach Figur 8 in einer Stellung zwischen der mittleren Öffnungsstellung und der völligen Öffnungsstellung
- Figur 13: einen vergrößerten perspektivischen Ausschnitt der Hebelgelenkanordnung nach Figur 8 in der völligen Öffnungsstellung
- Figur 14: eine perspektivische Rückansicht der Hebelgelenkanordnung nach Figur 13 in der völligen Öffnungsstellung
- Figur 15: eine perspektivische Rückansicht der Hebelgelenkanordnung nach Figur 12 in der Stellung zwischen der mittleren Öffnungsstellung und der völligen Öffnungsstellung
- Figur 16: eine perspektivische Rückansicht der Hebelgelenkanordnung nach Figur 11 in der Stellung zwischen der mittleren Schließstellung und der mittleren Öffnungsstellung

Die in den Figuren dargestellten Klappenantriebe weisen zwei gleiche paarweise mit Abstand parallel zueinander angeordnete Parallelogramm-Hebelanordnungen 1 und 1' auf. Zwei zueinander parallele Hebel 2, 2' jeder Parallelogramm-Hebelanordnung 3, 3' sind mit ihren einen Enden 3 und 4 in einem etwa senkrechten Abstand zueinander über einen Karosseriehebel 12 ortsfest an einem Kraftfahrzeug schwenkbar angelenkt, wobei die entsprechenden Schwenkachsen 6 und 7 der Anlenkstellen sich zueinander koaxial erstrecken.

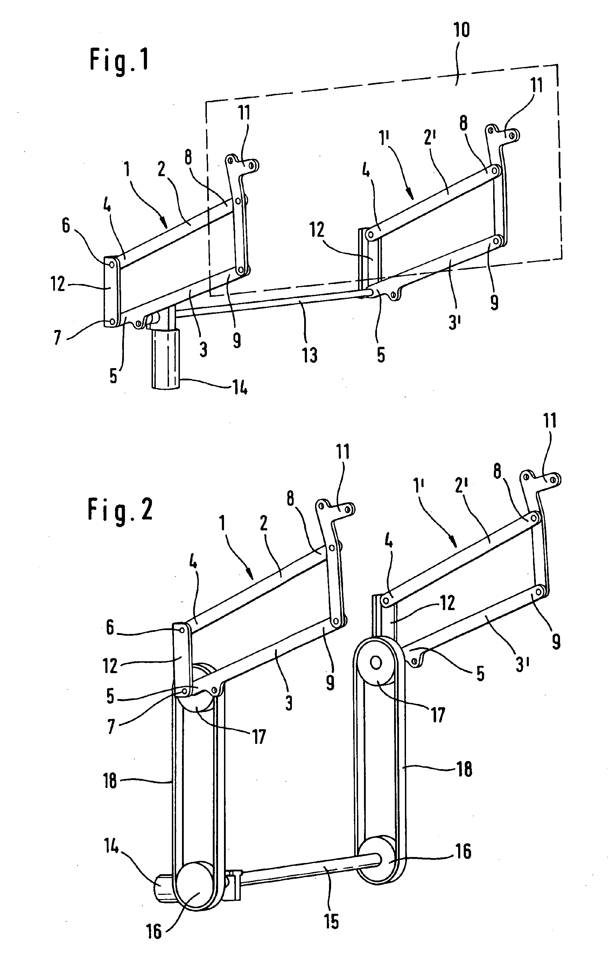

Die beiden anderen Enden 8 und 9 der Hebel 2 und 3 sind an einem mit einer in Figur 1 mit unterbrochener Linie dargestellten Klappe fest verbundenen Klappenhebel 11 angelenkt.

Bei dem Ausführungsbeispiel der Figur 1 erstreckt sich koaxial zur Schwenkachse 7 eine starre Antriebswelle 13, die drehfest mit den Hebeln 3 und 3' verbunden ist. Durch einen elektromotorischen Drehantrieb 14 ist die Antriebswelle 13 drehbar und mit ihr die Hebel 3 und 3' um etwa 180° schwenkbar antreibbar. Durch Verschwenken der Hebel 3 und 3' werden beide Parallelogramm-Hebelanordnungen 1 und 1' verschwenkt und so die Klappe 10 unter Beibehaltung ihrer senkrecht ausgerichteten Ebene in einem Bogen aus einer unteren Schließstellung in eine obere Offnungsstellung und bei Reversierbarkeit des Drehantriebs auch zurückbewegt.

Zur Unterstützung der Öffnungsbewegung können die Hebel 3 und 3' oder 2 und 2' von nicht dargestellten Gasfedern in Richtung zur Öffnungsstellung beaufschlagt sein.

Zur manuellen Bewegung der Klappe 10 von der Schließstellung in die Öffnungsstellung oder umgekehrt kann zwischen dem Drehantrieb 14 und der Antriebswelle 13 eine nicht dargestellte Kupplung angeordnet sein, die bei manueller Bewegung der Klappe 10 geöffnet ist und so den Kraftschluß zwischen Drehantrieb 14 und Antriebswelle 13 trennt.

Bei dem Ausführungsbeispiel der Figur 2 erstreckt sich parallel zu den Schwenkachsen 6 und 7 eine starre Antriebswelle 15, die drehfeste Zahnriemenscheiben 16 trägt und durch einen Drehantrieb 14 über eine nicht dargestellte Kupplung drehbar antreibbar ist.

In der Ebene der Zahnriemenscheiben 16, diesen parallel gegenüberliegend sind koaxial zur Schwenkachse 7 weitere Zahnriemenscheiben 17 drehfest mit den Hebeln 3 und 3' verbunden.

Um die einander gegenüberliegenden Zahnriemenscheiben 16 und 17 sind Zahnriemen 18 geführt, die die Drehbewegung der Antriebswelle 15 auf die Zahnriemenscheiben 17 übertragen und die Hebel 3 und 3' und damit die Parallelogramm-Hebelanordnungen 1, 1' schwenkbar antreiben, so daß die Klappe 10 zwischen ihrer Schließstellung und ihrer Offnungsstellung bewegbar ist.

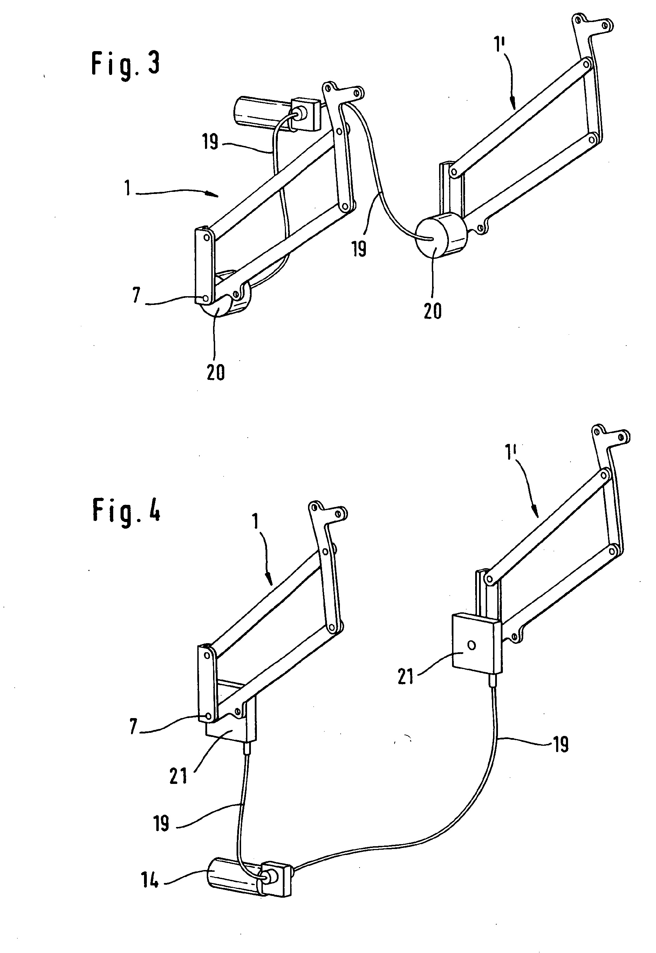

In Figur 3 sind zum Schwenkantrieb der Parallelogramm-Hebelanordnungen 1 und 1' durch den Drehantrieb 14 zwei flexible Wellen 19 drehbar antreibbar, die sich jeweils zu einem der Hebel 3 und 3' erstrecken und diese über Planetengetriebe 20 um die Schwenkachse 7 schwenkbar antreiben.

Anstatt der Planetengetriebe 20 werden in Figur 4 die Hebel 3 und 3' über Schneckengetriebe 21 von zwei flexiblen Wellen 19 um die Schwenkachse 7 schwenkbar angetrieben.

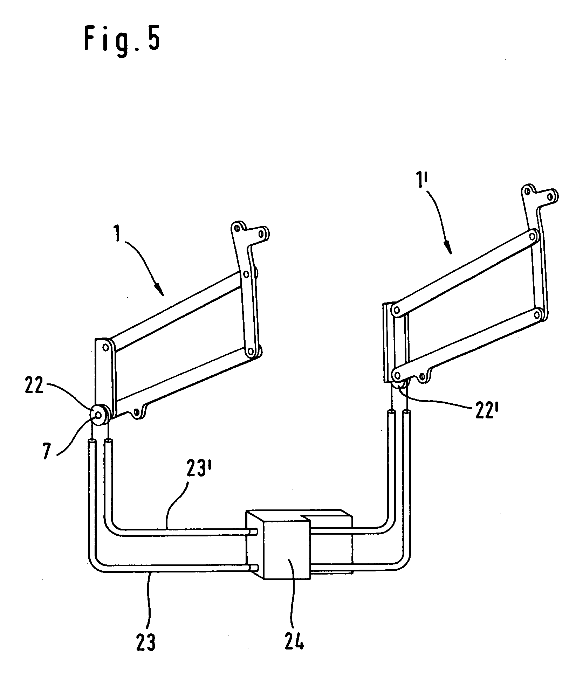

Bei dem Ausführungsbeispiel der Figur 5 sind koaxial zur Schwenkachse 7 Seilrollen 22 und 22' an den Hebeln 3 und 3' drehfest angeordnet. Um die Seilrollen 22 und 22' sind Seile 23 und 23' geführt, die von einem reversierbaren elektromotorischen Seilzugantrieb 24 ziehbar antreibbar sind Durch die Ziehbewegung treiben die Seile 23 und 23' die Seilrollen 22 und 22' drehbar an und verschwenken so die Hebel 3 und 3' und damit die Parallelogramm-Hebelanordnungen 1 und 1'.

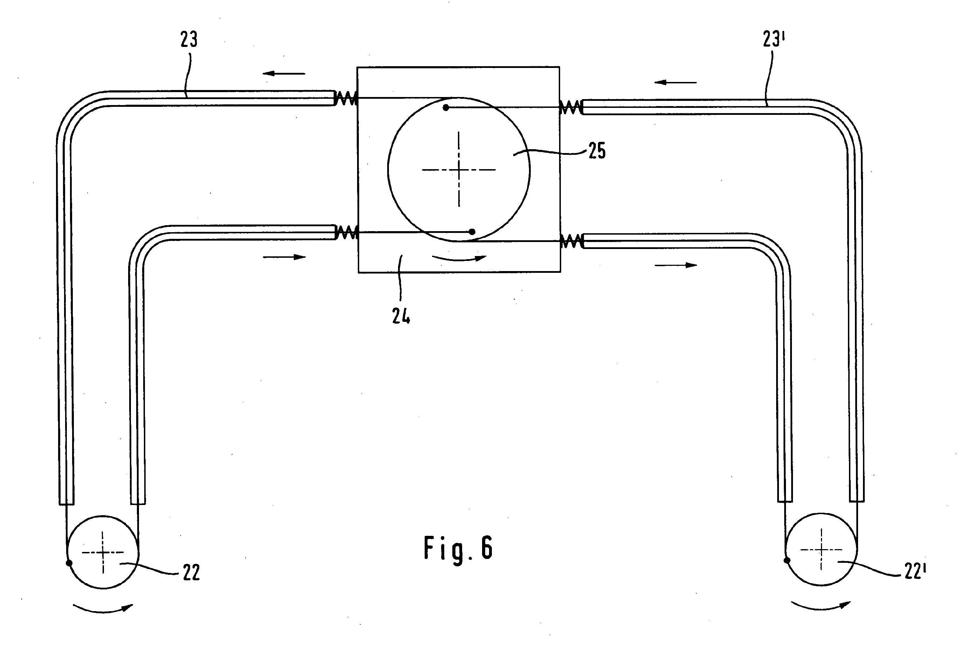

Wie in Figur 6 dargestellt, besitzt der Seilzugantrieb 24 eine Antriebsseilrolle 25, die von einem nicht dargestellten Drehantrieb reversierbar drehbar antreibbar ist. Dadurch sind die Seile 23 und 23' auf die Antriebsrolle 25 auf- bzw. abwickelbar und so die Seile 23 und 23' ziehbar antreibbar.

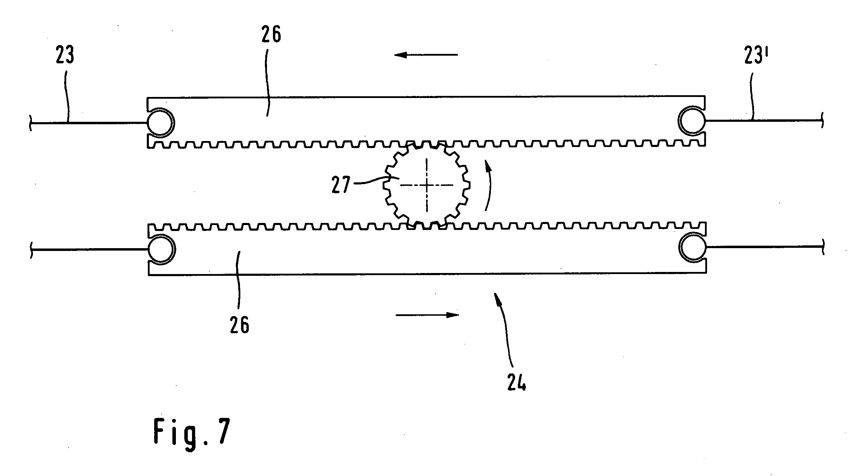

Alternativ zu den Seilrollen 22 und 22' können entsprechend Figur 7 zwei Zahnstangen 26 und 26' mit ihrer Verzahnung einander zugewandt, parallel zueinander angeordnet und durch ein in die Verzahnungen beider Zahnstangen 26 eingreifendes und von einem Drehantrieb reversierbar antreibbares Antriebsrad 27 gegenläufig in ihrer Längserstreckung bewegbar antreibbar sein.

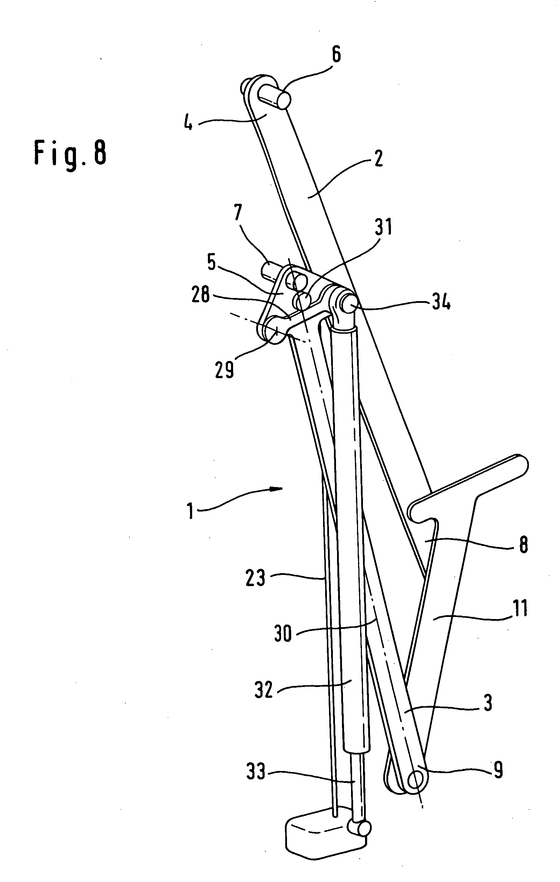

Bei dem Ausführungsbeispiel der Figuren 8 bis 16, bei denen nur eine Parallelogramm-Hebelanordnung 1 dargestellt ist, ist an dem Hebel 3 im Bereich seines Endes 5 ein erster Hilfshebel 28 mit seinem einen Ende um eine zur Schwenkachse 7 parallele erste Gelenkachse 29 schwenkbar angelenkt Diese Gelenkachse 29 befindet sich in einem Abstand zu einer Verbindungslinie 30 zwischen der Schwenkachse 7 und der Anlenkstelle des Hebels 3 an der Klappe 10.

Etwa auf der Verbindungslinie 30 und in etwa gleicher Höhe, wie die erste Gelenkachse 29, ist ein erster Anschlag 31 in den Schwenkbereich des ersten Hilfshebels 28 ragend an dem Hebel 3 angeordnet. An dem freien Ende des ersten Hilfshebels 28 ist das eine Ende einer Gasfeder 32 an einer Anlenkstelle 34 angelenkt, deren aus dem anderen Ende herausragende Kolbenstange 33 mit ihrem freien Ende an einem ortsfesten Bauteil des Kraftfahrzeugs angelenkt ist. Der Abstand zwischen der ersten Gelenkachse 29 und der Anlenkstelle 34 ist etwa doppelt so groß wie der Abstand zwischen der Verbindungslinie 30 und der ersten Gelenkachse 29.

In Figur 8 ist die Schließstellung des Klappenantriebs dargestellt. Durch Öffnen eines nicht dargestellten Klappenschlosses, mit dem die Klappe 10 in der Schließstellung an der Karosserie des Kraftfahrzeugs gehalten wird, beaufschlagt die Gasfeder in ihrer Ausfahrrichtung den ersten Hilfshebel 28 an dessen Anlenkstelle 34. Dabei stützt sich der erste Hilfshebel 28 mit seinem mittleren Bereich an dem ersten Anschlag 31 ab, so daß von der Gasfeder 32 ein Drehmoment auf den ersten Hilfshebel 28 ausgeübt wird. Dieses Drehmoment führt zu einem Verschwenken des ersten Hilfshebels 28 um den ersten Anschlag 31 im Gegenuhrzeigersinn, wodurch über die erste Gelenkachse 28 auch der Hebel im Gegenuhrzeigersinn schwenkend mitgenommen wird.

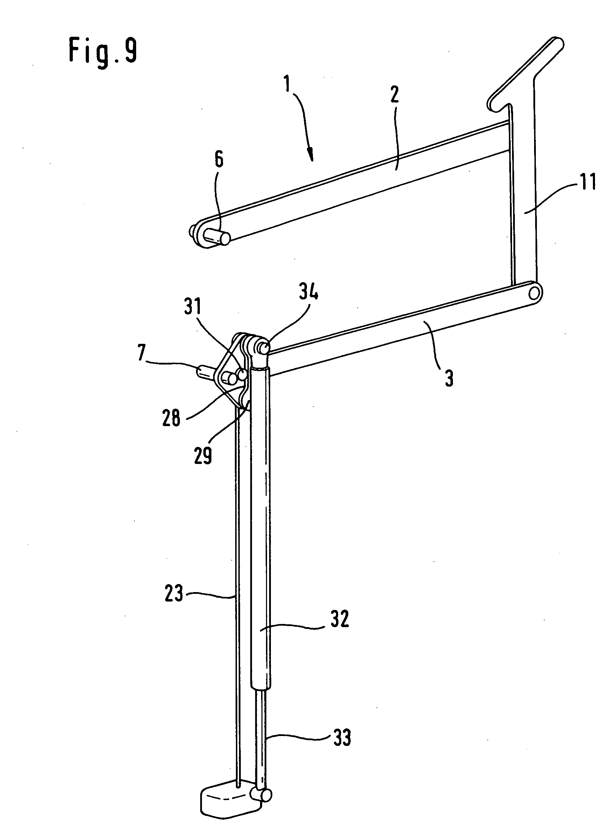

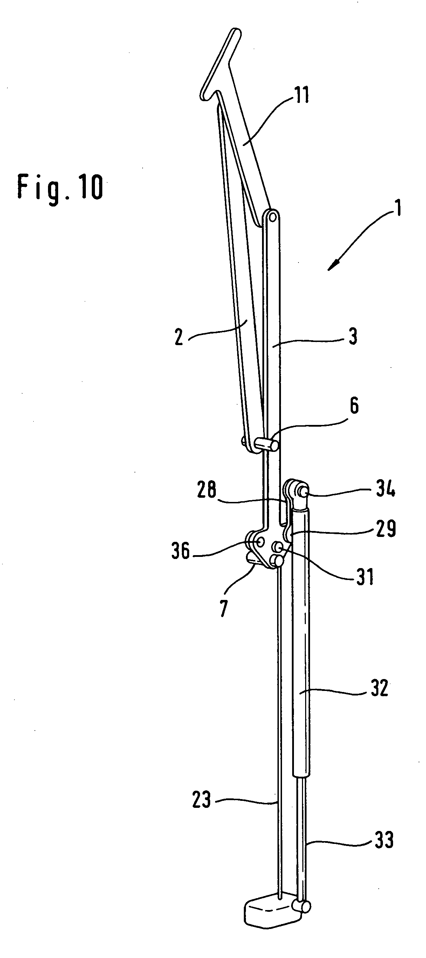

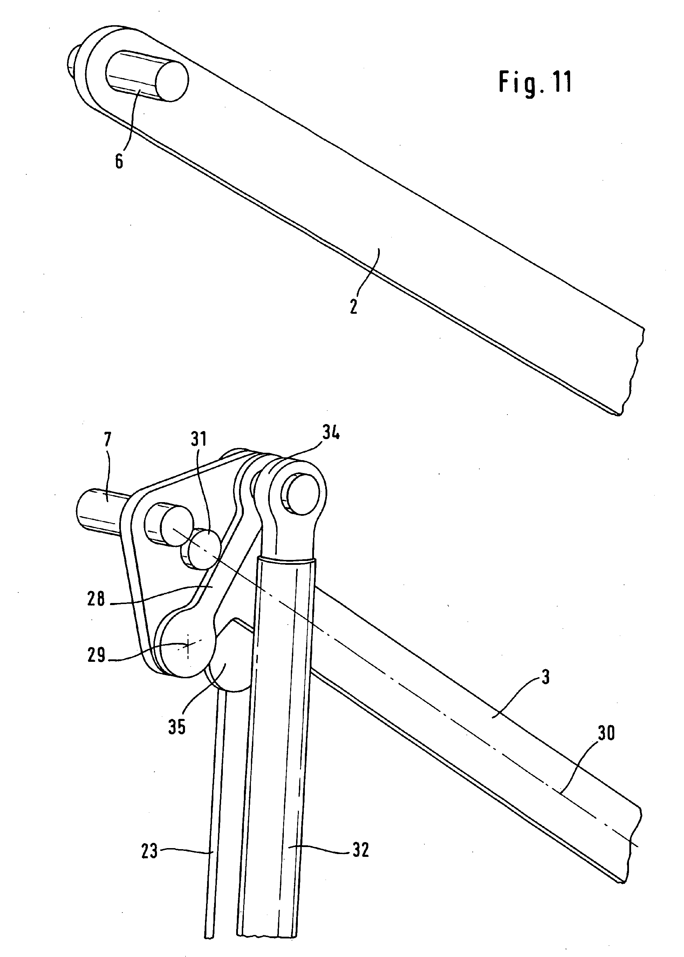

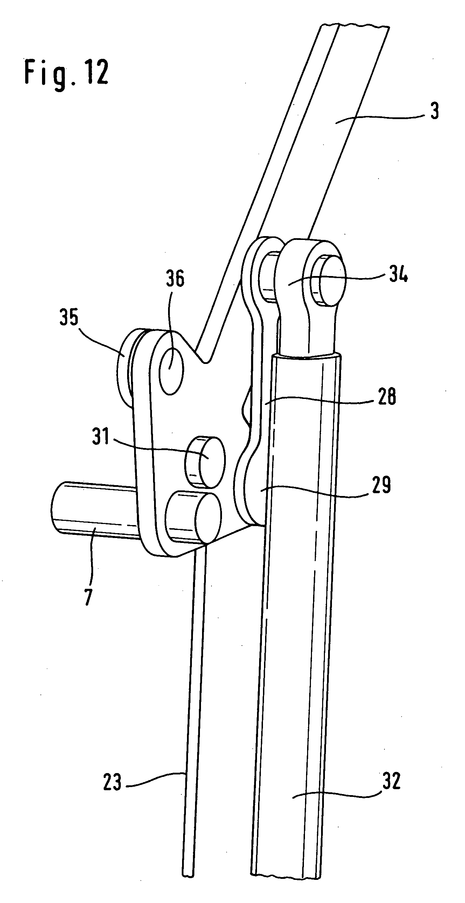

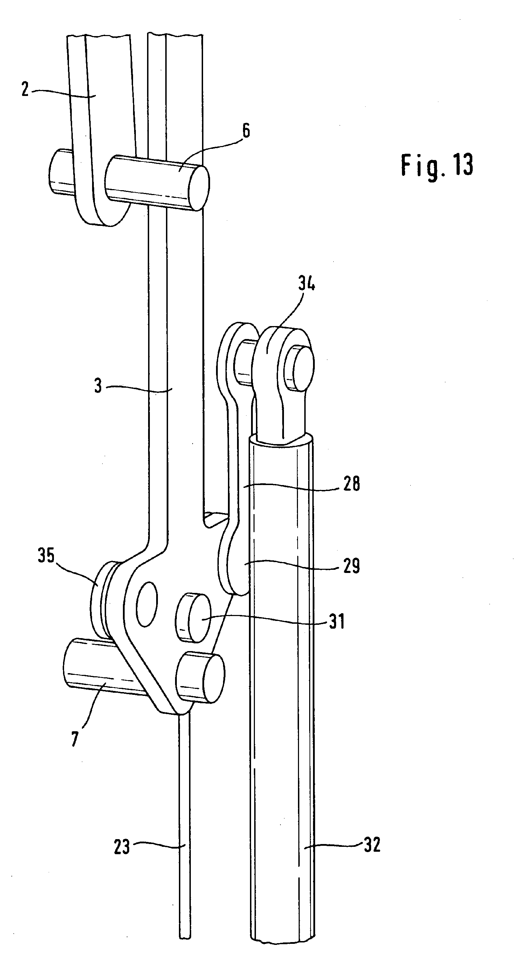

Wenn über die in Figur 11 gezeigte Stellung eine in Figur 9 dargestellte mittlere Öffnungsstellung erreicht ist, erfolgt keine Abstützung des ersten Hilfshebels 28 an dem ersten Anschlag 31 mehr. Nun führt die weitere Beaufschlagung des ersten Hilfshebels 28 durch die Gasfeder 32 zu einer Ziehbeaufschlagung des ersten Hilfshebels 28, die ein Drehmoment um die Schwenkachse 7 erzeugt und den Hebel 3 weiter entgegen dem Uhrzeigersinn dreht, bis über die in Figur 12 gezeigte Stellung die in Figur 10 und 13 dargestellte völlige Öffnungsstellung erreicht wird.

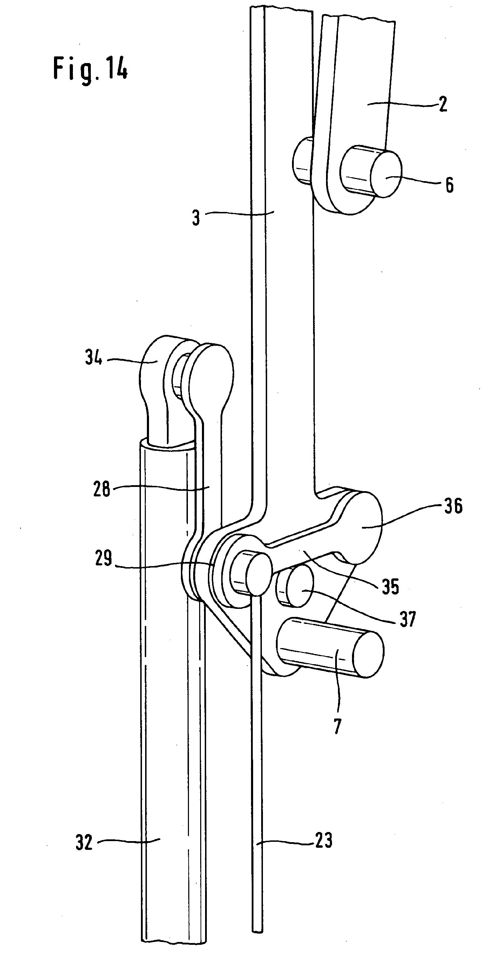

Wie insbesondere in den Figuren 14 bis 16 zu sehen ist, ist auf der dem ersten Hilfshebel 28 gegenüberliegenden Seite des Hebels 3 ein zweiter Hilfshebel 35 angeordnet, der etwa dem ersten Hilfshebel 28 entspricht.

Dieser zweite Hilfshebel 35 entspricht etwa dem ersten Hilfshebel 28 und ist um eine zweite Gelenkachse 36 schwenkbar an dem Hebel 3 angelenkt, die sich etwa in gleichem Abstand zur Verbindungslinie 30, wie die erste Gelenkachse 28 aber auf der anderen Seite der Verbindungslinie 30 parallel zur Schwenkachse 7 erstreckt

Etwa koaxial zum ersten Anschlag 31 ragt ein zweiter Anschlag 37 in den Schwenkbereich des zweiten Hilfshebels 35.

An dem freien Ende des zweiten Hilfshebels 35 ist ein Ende eines Seils 23 befestigt, das sich etwa parallel zur Gasfeder 32 erstreckt und durch einen Seilzugantrieb, wie er z.B. in den Figuren 6 bis 8 dargestellt ist, ziehbar antreibbar ist.

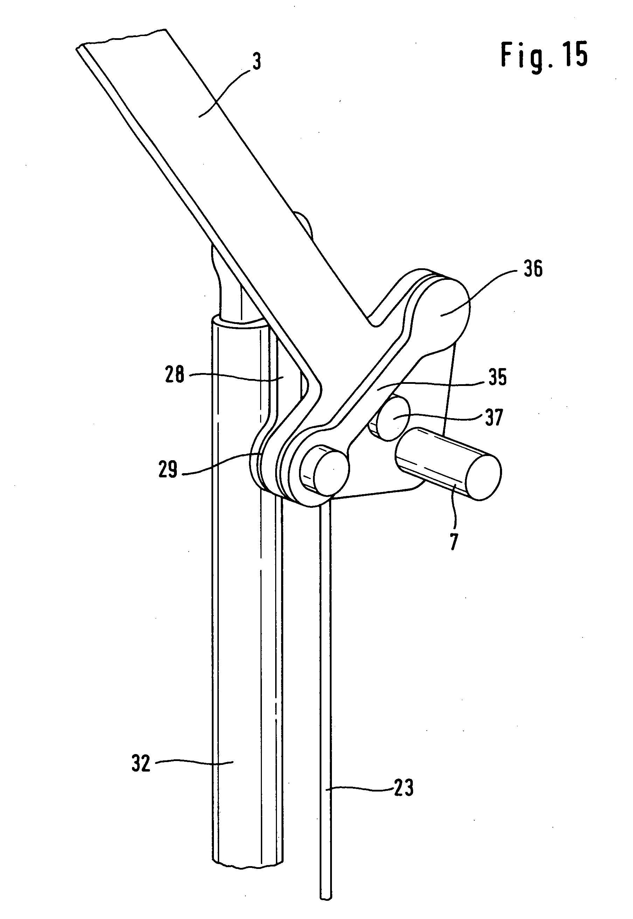

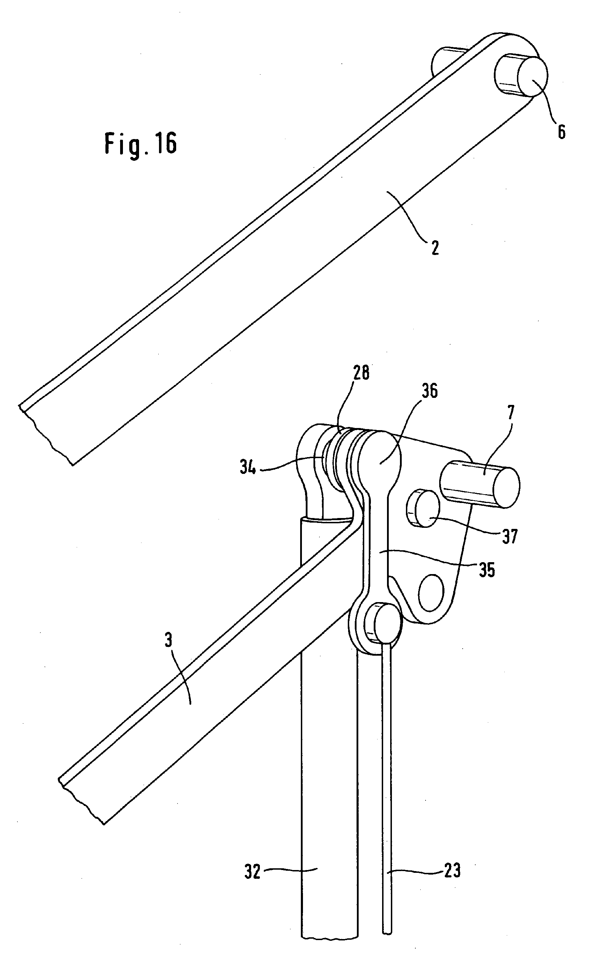

Wie aus der Figur 14 zu sehen ist, liegt in der völligen Öffnungsstellung der zweite Hilfshebel 35 mit seinem mittleren Bereich an dem zweiten Anschlag 37 an, so daß bei Zugbeaufschlagung des Seils 23 ein Drehmoment auf den zweiten Hilfshebel 35 und über die zweite Gelenkachse 36 auch auf den Hebel 3 ausgeübt wird, was zu einem Verschwenken des Hebels 3 entgegen der Kraft der Gasfeder 32 über die in Figur 15 dargestellte Stellung bis in die mittlere Öffnungsstellung führt. Von da ab wird äquivalent zum Öffnungsvorgang der zweite Hilfshebel 35 ziehbeaufschlagt, wodurch ein Drehmoment um die Schwenkachse 7 erzeugt und der Hebel 3 weiter über die in Figur 16 dargestellte Stellung bis in die Schließstellung bewegt wird.

### Bezugszeichenliste

- 1: Parallelogramm-Hebelanordnung
- 1': Parallelogramm-Hebelanordnung
- 2: Hebel
- 2': Hebel
- 3: Hebel
- 4: Ende
- 5: Ende
- 6: Schwenkachse
- 7: Schwenkachse
- 8: Ende
- 9: Ende
- 10: Klappe
- 11: Klappendeckel
- 12: Karosseriedeckel
- 13: Antriebswelle
- 14: Drehantrieb
- 15: Antriebswelle
- 16: Zahnriemenscheiben
- 17: Zahnriemenscheiben
- 18: Zahnriemen
- 19: flexible Wellen
- 20: Planetengetriebe
- 21: Schneckengetriebe
- 22: Seilrolle
- 22': Seilrolle
- 23: Seil
- 23': Seil
- 24: Seilzugantrieb
- 25: Antriebsseilrolle
- 26: Zahnstangen
- 27: Antriebsrad
- 28: 1. Hilfshebel
- 29: 1. Gelenkstange
- 30: Verbindungslinie
- 31: 1. Anschlag
- 32: Gasfeder
- 33: Kolbenstange
- 34: Anlenkstelle
- 35: 2. Hilfshebel
- 36: 2. Gelenkachse
- 37: 2. Anschlag

## Patentansprüche

1. Klappenantrieb für eine Klappe, insbesondere für die Heckklappe eines Kraftfahrzeugs, die zwei gleiche paarweise mit Abstand zueinander angeordnete Hebelgelenkanordnungen aufweist, über die die Klappe aus ihrer Schließstellung in ihre Öffnungsstellung und zurück bewegbar ist, wobei die Hebelgelenkanordnungen mit ihren einen Enden jeweils an einem Seitenbereich der Klappe und mit ihren anderen Enden ortsfest an dem Kraftfahrzeug oder einem Bauteil des Kraftfahrzeugs schwenkbar angelenkt sind und die einander entsprechenden Schwenkachsen der Anlenkstellen sich zueinander koaxial erstrecken, **dadurch gekennzeichnet, daß** von einer gemeinsamen motorischen, insbesondere elektromotorischen Antriebseinheit Bewegungsübertragungsmittel zum schwenkbaren Antrieb eines ortsfest an dem Kraftfahrzeug oder einem Bauteil des Kraftfahrzeugs angelenkten Hebels (3, 3') jeder Hebelgelenkanordnung geführt sind.

2. Klappenantrieb nach Anspruch 1, **dadurch gekennzeichnet, daß** die ortsfest an dem Kraftfahrzeug oder einem Bauteil des Kraftfahrzeugs angelenkten Hebel (3, 3') aus ihrer Schließstellung in ihre Öffnungsstellung um etwa 180° schwenkbar sind

3. Klappenantrieb nach einem der vorhergehenden Ansprüche, **dadurch gekennzeichnet, daß** die Hebelgelenkanordnungen Viergelenk-Hebelanordnungen sind.

4. Klappenantrieb nach Anspruch 3, **dadurch gekennzeichnet, daß** die Viergelenk-Hebelanordnungen Parallelogramm-Hebelanordnungen (1, 1') sind.

5. Klappenantrieb nach einem der vorhergehenden Ansprüche, **dadurch gekennzeichnet, daß** die motorische Antriebseinheit ein Drehantrieb (14) ist.

6. Klappenantrieb nach Anspruch 5, **dadurch gekennzeichnet, daß** durch den Drehantrieb (14) eine starre Antriebswelle (13) drehbar antreibbar ist, die sich koaxial zu einer der Schwenkachsen (7) der ortsfesten Anlenkstellen am Kraftfahrzeug oder einem Bauteil des Kraftfahrzeugs erstreckt und drehfest jeweils mit einem der einander entsprechenden Hebel (3, 3') der Hebelgelenkanordnungen verbunden ist.

7. Klappenantrieb nach Anspruch 5, **dadurch gekennzeichnet, daß** durch den Drehantrieb (14) eine starre Antriebswelle (15) drehbar antreibbar ist, die sich parallel zu einer der Schwenkachsen (7) der ortsfesten Anlenkstellen am Kraftfahrzeug oder einem Bauteil des Kraftfahrzeugs erstreckt und die über Getriebe mit jeweils einem der einander entsprechenden Hebel (3, 3') der Hebelgelenkanordnung verbunden ist, wobei diese Hebel (3, 3') von den Getrieben um die Schwenkachse (7) schwenkbar antreibbar sind.

8. Klappenantrieb nach Anspruch 7, **dadurch gekennzeichnet, daß** die Getriebe Kettengetriebe oder Zahnriemengetriebe sind, die ein auf der Antriebswelle (15) fest angeordnetes Antriebsrad und ein an dem Hebel (3, 3') drehfest angeordnetes Triebrad aufweisen, wobei eine Kette oder ein Zahnriemen (18) um Antriebsrad und Triebrad geführt sind.

9. Klappenantrieb nach Anspruch 5, **dadurch gekennzeichnet, daß** durch den Drehabtrieb (14) flexible Wellen (19) drehbar antreibbar sind, die sich jeweils zu einer der Schwenkachsen (7) der ortsfesten Anlenkstellen am Kraftfahrzeug oder einem Bauteil des Kraftfahrzeugs erstrecken und durch die jeweils ein Hebel (3, 3') der Hebelgelenkanordnung drehbar antreibbar ist.

10. Klappenantrieb nach Anspruch 9, **dadurch gekennzeichnet, daß** von jeder flexiblen Welle (19) der ihr zugeordnete Hebel (3, 3') über ein oder mehrere Getriebe drehbar antreibbar ist.

11. Klappenantrieb nach Anspruch 10. **dadurch gekennzeichnet, daß** das Getriebe ein Planetengetriebe (20) oder ein Schneckengetriebe (21) ist.

12. Klappenantrieb nach Anspruch 5, **dadurch gekennzeichnet, daß** die motorische Antriebseinheit ein Seilzugantrieb (24) ist, durch den zwei Seile (23, 23') ziehbar antreibbar sind, die zu Seilrollen (22, 22') führen und auf diese aufwickelbar sind, die jeweils koaxial zu einer der Schwenkachsen (7) der ortsfesten Anlenkstellen am Kraftfahrzeug oder einem Bauteil des Kraftfahrzeugs angeordnet und drehfest mit jeweils einem der einander entsprechenden Hebel (3, 3') der Hebelgelenkanordnungen verbunden sind.

13. Klappenantrieb nach Anspruch 12, **dadurch gekennzeichnet, daß** durch den Seilzugantrieb (24) eine oder zwei Antriebsseilrollen (25) drehbar antreibbar sind, auf die eines oder zwei der Seile (23, 23') aufwickelbar sind

14. Klappenantrieb nach Anspruch 12, **dadurch gekennzeichnet, daß** durch den Seilzugantrieb (24) eine oder zwei Zahnstangen (26) in ihrer Längsrichtung bewegbar antreibbar sind, an denen eines oder zwei der Seile (23, 23') ziehbar befestigt sind.

15. Klappenantrieb nach einem der Ansprüche 13 und 14, **dadurch gekennzeichnet, daß** jeweils zwei Seile (23, 23') von der Antriebsseilrolle (25) oder der Zahnstange (26) zu einer Seilrolle (22, 22') geführt sind und gegenläufig auf die Antriebsseilrolle (25) aufwickelbar oder von der Zahnstange (26) ziehbar sowie gegenläufig auf die Seilrolle (22, 22') auf- und/ oder abwickelbar sind.

16. Klappenantrieb nach einem der Ansprüche 12 und 13, **dadurch gekennzeichnet, daß** die Antriebsseilrolle (25) oder die Zahnstange (26) über ein Getriebe, insbesondere ein Untersetzungsgetriebe von der motorischen Antriebseinheit antreibbar ist

17. Klappenantrieb nach einem der Ansprüche 1 bis 5 und 12 bis 16, **dadurch gekennzeichnet, daß** jeweils ein ortsfest an dem Kraftfahrzeug oder einem Bauteil des Kraftfahrzeugs angelenkter Hebel (3) jeder Hebelgelenkanordnung einen ersten Hilfshebel (28) aufweist, der an dem Hebel (3) mit seinem einen Endbereich in einem Abstand zur Verbindungslinie (30) zwischen der ortsfesten Anlenkstelle des Hebels (3) am Kraftfahrzeug oder einem Bauteil des Kraftfahrzeugs und der Anlenkstelle an der Klappe (10) um eine zu den Schwenkachsen (7) des Hebels (3) parallele erste Gelenkachse (29) schwenkbar angelenkt und im Bereich der Verbindungslinie (30) in einem Abstand zur ortsfesten Anlenkstelle an einem ersten Anschlag (31) anschlagbar ist und an dessen anderem Endbereich von ersten Bewegungsmitteln etwa in Richtung der Erstreckung des Hebels (3) in der Schließstellung oder der Öffnungsstellung kraftbeaufschlagbar ist.

18. Klappenantrieb nach Anspruch 17, **dadurch gekennzeichnet, daß** der ortsfest an dem Kraftfahrzeug oder einem Bauteil des Kraftfahrzeugs angelenkte Hebel (3) einen zweiten Hilfshebel (35) aufweist, der an dem Hebel (3) mit seinem einen Endbereich in einem Abstand zur Verbindungslinie (30) zwischen der ortsfesten Anlenkstelle des Hebels (3) am Kraftfahrzeug oder einem Bauteil des Kraftfahrzeugs und der Anlenkstelle an der Klappe (10) auf der der ersten Gelenkachse (29) gegenüberliegenden Seite der Verbindungslinie (30) um eine zu den Schwenkachsen (7) des Hebels (3) parallele zweite Gelenkachse (36) schwenkbar angelenkt und im Bereich der Verbindungslinie (30) in einem Abstand zur ortsfesten Anlenkstelle an einem zweiten Anschlag (37) anschlagbar ist und an dessen anderem Endbereich von zweiten Bewegungsmitteln etwa in Richtung der Erstreckung des Hebels (3) in der Schließstellung oder der Öffnungsstellung kraftbeaufschlagbar ist.

19. Klappenantrieb nach Anspruch 18, **dadurch gekennzeichnet, daß** der erste Hilfshebel (28) und der zweite Hilfshebel (35) an einander gegenüberliegenden Seiten des Hebels (3) angeordnet sind.

20. Klappenantrieb nach einem der Ansprüche 19, **dadurch gekennzeichnet, daß** der erste und der zweite Anschlag (31, 37) etwa koaxial zueinander angeordnet sind.

21. Klappenantrieb nach einem der Ansprüche 19 und 20, **dadurch gekennzeichnet, daß** der erste und der zweite Hilfshebel (28, 35) etwa gleichlang sind.

22. Klappenantrieb nach einem der Ansprüche 16 bis 20, **dadurch gekennzeichnet, daß** der erste Hilfshebel (28) und/oder der zweite Hilfshebel (35) mit ihrem Mittelbereich zwischen Gelenkachse (29, 36) und Angriffsstelle der Bewegungsmittel an dem ersten oder zweiten Anschlag (31, 37) anschlagbar sind.

23. Klappenantrieb nach einem der Ansprüche 17 bis 22, **dadurch gekennzeichnet, daß** die ersten und/oder die zweiten Bewegungsmittel Seile (23, 23') eines Seilzugantriebs sind.

24. Klappenantrieb nach einem der Ansprüche 17 bis 23, **dadurch gekennzeichnet, daß** die ersten und/oder die zweiten Bewegungsmittel Gasfedern (32) sind.

25. Klappenantrieb nach einem der vorhergehenden Ansprüche, **dadurch gekennzeichnet, daß** durch eine Hinderniserkennung ein eine Schwenkbewegung der Hebelanordnung behindernder Widerstand erfaßbar und ein entsprechendes Widerstandssignal einer Elektronik zuführbar ist, durch die die Antriebseinheit in der einen Antriebsrichtung anhaltbar ist.

26. Klappenantrieb nach Anspruch 25, **dadurch gekennzeichnet, daß** durch die Elektronik bei Erhalt eines Widerstandssignals die Antriebseinheit um einen bestimmten Weg entgegen der einen Antriebsrichtung bewegend umschaltbar ist.

27. Klappenantrieb nach einem der Ansprüche 25 und 26, **dadurch gekennzeichnet, daß** die Hinderniserkennung einen die jeweilige Position eines der Hebel der Hebelanordnung erfassenden Positionssensor, insbesondere ein Potentiometer aufweist, durch den ein entsprechendes Positionssignal erzeugbar und der Elektronik zuführbar sowie in der Elektronik die zum Erreichen der jeweiligen Position tatsächlich benötigte Laufzeit mit einer bestimmten vorgegebenen Laufzeit zum Erreichen der jeweiligen Position vergleichbar ist, wobei bei Überschreitung der vorgegebenen Laufzeit durch die tatsächliche Laufzeit das Widerstandssignal erzeugbar ist.

28. Klappenantrieb nach einem der vorhergehenden Ansprüche, **dadurch gekennzeichnet, daß** zwischen der motorischen Antriebseinheit und den Bewegungsübertragungsmitteln oder zwischen den Bewegungsübertragungsmitteln und dem davon schwenkbar antreibbaren Hebel (3) der Hebelgelenkanordnung eine Kupplung angeordnet ist, die bei manueller Bewegungsbeaufschlagung der Klappe (10) öffenbar ist.
